# EUROPÄISCHE PATENTSCHRIFT

(11) **EP 3 844 035 B1**
(45) Veröffentlichungstag und Bekanntmachung des Hinweises auf die Patenterteilung: **28.08.2024**
(21) Anmeldenummer: 20742186.8
(22) Anmeldetag: 09.07.2020
(51) Int. Cl.: B60R 25/24, G07C 9/00, H01Q 1/32

(54) **SCHLIESSSYSTEM, INSBESONDERE FÜR EIN KRAFTFAHRZEUG**
LOCKING SYSTEM, IN PARTICULAR FOR A MOTOR VEHICLE
SYSTÈME DE VERROUILLAGE, EN PARTICULIER POUR UN VÉHICULE AUTOMOBILE

(30) Priorität: 21.08.2019 DE 102019005815
(43) Veröffentlichungstag der Anmeldung: 07.07.2021
(73) Patentinhaber: Marquardt GmbH, 78604 Rietheim-Weilheim (DE)
(72) Erfinder: BECHER, Andreas, 78052 Villingen-Schwenningen (DE)
(74) Vertreter: Staeger & Sperling Partnerschaftsgesellschaft mbB
(86) Internationale Anmeldenummer: PCT/EP2020/069365
(87) Internationale Veröffentlichungsnummer: WO 2021/032358

(56) Entgegenhaltungen:
- EP-A1- 1 902 913
- EP-A2- 1 508 886
- WO-A1-2013/094661
- WO-A1-98/50652
- WO-A2-2009/109578
- DE-A1- 102014 018 668
- DE-A1- 4 340 260

## Beschreibung

Die Erfindung geht aus von einem Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschlosssysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen umfassen zu deren bestimmungsgemäßen Betrieb Sende- und/oder Empfangseinheiten für die Übertragung der insbesondere elektromagnetischen Signale, wobei die die Sende- und/oder Empfangseinheit eine Antenne zur Übertragung der Signale aufweist. Im bestimmungsgemäßen Betrieb ist zwischen dem Schlüssel und der Steuereinrichtung wenigstens ein Signal als codiertes Betriebssignal zur Authentifikation des Schlüssels übertragbar, so dass nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless(schlüssellos)"-Funktionalitäten weiterentwickelt. So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/StopTaste im Armaturenbrett betätigt.

Um eine optimale Übertragung der Signale sowohl im Innen- als auch im Außenbereich des Kraftfahrzeugs zu gewährleisten ist bei der ersten Einrichtung jeweils eine Sende- und/oder Empfangseinheit mit einer Antenne für den Innenbereich und für den Außenbereich vorgesehen. Nachteilig bei einem solchen Schließsystem erscheinen daher insbesondere dessen Herstellungskosten.

Weitere Schließsysteme sind beispielsweise aus den Dokumenten EP 1 508 886 A2, EP 1 902 913 A1, DE 10 2014 018 668 A1, WO 98/50652 A1, WO 2009/109578 A2 und WO 2013/094661 A1 bekannt.

Der Erfindung liegt die Aufgabe zugrunde, das Schließsystem derart weiterzuentwickeln, dass dieses bei im Wesentlichen gleicher Funktionalität kostengünstiger ist.

Diese Aufgabe wird bei einem gattungsgemäßen Schließsystem durch die kennzeichnenden Merkmale des Anspruchs 1 gelöst.

Beim erfindungsgemäßen Schließsystem ist lediglich eine einzige Sende- und/oder Empfangseinheit für die erste Einrichtung vorgesehen, wobei die Sende- und/oder Empfangseinheit für die erste Einrichtung zwei Antennen umfasst. Des Weiteren ist ein Signalverteiler in der Art eines Power Splitters für die beiden Antennen vorgesehen. Die Sende- und/oder Empfangseinheit steht mittels des Signalverteilers mit den beiden Antennen in Verbindung. Aufgrund der lediglich einen einzigen Sende- und/oder Empfangseinheit für beide Antennen wird daher eine wesentliche Reduzierung der Kosten erzielt. Weitere Ausgestaltungen der Erfindung sind Gegenstand der Unteransprüche.

Zwecks guter Übertragung der Signale in dem jeweiligen Bereich sind die beiden Antennen räumlich getrennt angeordnet. Und zwar ist die eine bzw. ist eine erste Antenne dem Innenbereich als Innenantenne und die andere bzw. eine zweite Antenne dem Außenbereich als Außenantenne zugeordnet. Auf diese Weise lässt eine gute Signalabdeckung für das gesamte Fahrzeug erzielen.

Des Weiteren kann der Signalverteiler die beiden Antennen zwecks Anpassung an die jeweiligen Bereiche mit unterschiedlichen Leistungen in der Art eines asymmetrischen Signalverteilers betreiben. Insbesondere kann es sich anbieten, dass der Signalverteiler die Innenantenne mit in etwa 10 % sowie die Außenantenne mit in etwa 90 % der Gesamtleistung für die Sendeleistung betreibt. Die Erfindung vermittelt somit die weitere Erkenntnis, dass die Innenantenne weniger Leistung als die Außenantenne benötigt, da von der Innenantenne ein kleinerer Bereich abzudecken ist.

In weiterer Ausgestaltung kann der Signalverteiler einen Eingang für die Signalübertragung zwischen der Sende- und/oder Empfangseinheit sowie dem Signalverteiler und je einen Ausgang zwischen dem Signalverteiler und der jeweiligen Antenne aufweisen. Dabei kann vorzugsweise die Signalstärke für den Ausgang zur Außenantenne nahezu verlustfrei gewählt werden. Insbesondere kann die Auskopplung am Ausgang zur Außenantenne mit einem Verlust von in etwa 0,5 dB (Dezibel) eingestellt sein. Weiterhin kann dabei die Signalstärke für den Ausgang zur Innenantenne verlustbehaftet gewählt sein. Insbesondere kann die Auskopplung am Ausgang zur Innenantenne mit einem Verlust von in etwa 10 dB eingestellt sein. Des Weiteren kann die Signalstärke für die Außenantenne mittels einer losen Kopplung zwischen dem Eingang des asymmetrischen Signalverteilers und dem Ausgang des asymmetrischen Signalverteilers zur Innenantenne eingestellt sein. Schließlich kann die Übertragung der Signale mittels eines Trägers im HF(Hochfrequenz)-Bereich erfolgen. Insbesondere kann es sich anbieten, dass es sich bei dem HF-Bereich um das standardisierte Bluetooth, insbesondere um Bluetooth Low Energy (BLE) mit einer Trägerfrequenz von in etwa 2,45 GHz, handelt. Des Weiteren kann es sich bei der zweiten Einrichtung um ein Smartphone, auf dem ein entsprechendes Anwendungsprogramm installiert ist, insbesondere um ein solches mit einer BLE(Bluetooth Low Energy)-Schnittstelle, handeln, welches bereits bei den meisten Benutzern vorhanden ist. Insoweit können dann die herkömmlicher Weise anfallenden Kosten für einen elektronischen Schlüssel als zweite Einrichtung eingespart werden.

Für eine besonders bevorzugte Ausgestaltung der Erfindung ist nachfolgendes festzustellen.

Die Verwendung des Smartphones als Fahrzeugschlüssel hält in ersten Fahrzeugen, insbesondere in Elektrofahrzeugen, wie beispielsweise bei Tesla-Fahrzeugen, Einzug. Aus Komfortgründen ist es gewünscht, dass dabei das Smartphone möglichst nicht vom Benutzer bedient werden muss sondern Keyless-Funktionalität aufweist. Für diese Komfortanwendung eignet sich besonders eine drahtlose Schnittstelle im Nahbereich. Das Smartphone bietet dazu eine Bluetooth Low Energy Schnittstelle an, die bei ca. 2,45 GHz arbeitet. Ein Nachteil dieser Schnittstelle ist die etwas höhere Frequenz, die zu Schwierigkeiten der Signalabdeckung im Innen- und/oder Außenbereich führt. Lösungen mit einer Antenne steht dabei auch der vermehrte Einsatz von Wärmeschutzverglasungen entgegen, die hochfrequente Signale stark dämpfen. Der Einsatz von zwei räumlich getrennten Antennen bedingt jedoch bei optimaler Signalabdeckung den Einsatz auch von zwei Bluetooth Low Energy Sende- und/oder Empfangseinheiten, was wiederum zu höheren Kosten führt.

Die Erfindung sieht vor, dass die Signalabdeckung für den Innen- und/oder den Außenbereich mit zwei Antennen und nur einer Bluetooth Low Energy Sende- und/oder Empfangseinheit realisiert wird. Dabei wird das Signal von der Bluetooth Low Energy Sende- und/oder Empfangseinheit über einen asymmetrischen HF-Signalverteiler an die zwei Antennen verteilt. Bei der Erfindung ist nun nachfolgende Erkenntnis gewonnen. Würde dies mit einem einfachen symmetrischem "Power Splitter" geschehen, so würden beide Antennen die Hälfte der Signalstärke verlieren, was wiederum zu einer starken Verminderung der Signalausbreitung führen würde. Die verminderte Signalausbreitung würde besonders im Außenbereich zu einer deutlich verminderten Funkreichweite führen. Hingegen würde die verminderte Funkreichweite im Fahrzeug Innenraum sich kaum auf die Signalabdeckung auswirken, weil im Fahrzeug Innenraum die Entfernungen zwischen der Innenantenne und dem Smartphone erheblich geringer sind. Setzt man nun einen asymmetrischen HF-Signalverteiler ein, so kann durch lose Kopplung zwischen dem Eingang des asymmetrischen HF-Signalverteilers und dem Ausgang zur Innenantenne die Signalstärke für die Außenantenne so eingestellt werden, dass diese nahezu verlustfrei ist, während diese für die Innenantenne mit akzeptablen Verlusten eine noch gute Innenraum-Signalabdeckung gewährleistet. Insbesondere erscheint als ein guter Kompromiss, eine Auskopplung der Innenantenne mit 10 dB Verlust zu wählen, was wiederum bei der Außenantenne zu einem Verlust von 0,5 dB führt.

Geschaffen ist mittels der Erfindung ein asymmetrischer HF-Signalverteiler für die Signalabdeckung im Innen- und/oder Außenbereich eines Fahrzeugs für ein Smart Access System. Die Erfindung kann für alle Anwendungen eingesetzt werden, bei denen eine Signalabdeckung in einer Karosserie eines Fahrzeugs bzw. in einem Raum sowie im Außenbereich der Karosserie bzw. des Raums notwendig ist, wobei insbesondere der Innenbereich stets kleiner als der Außenbereich sein sollte.

Die mit der Erfindung erzielten Vorteile bestehen insbesondere darin, dass die erfindungsgemäße Lösung Kosten für eine zusätzliche Sende- und/oder Empfangseinheit, bei der es sich um eine Bluetooth Low Energy Sende- und/oder Empfangseinheit handeln kann, einspart. Darüber hinaus erleichtert die Erfindung das Halten der Bluetooth Low Energy Verbindung des Fahrzeugs mit dem Smartphone, da das Smartphone diese beim Positionswechsel des Smartphones vom Innen- in den Außenbereich beibehält. Bei einer Lösung mit zwei Bluetooth Low Energy Sende- und/oder Empfangseinheiten muss diese Verbindung immer wieder zur jeweiligen Bluetooth Low Energy Sende- und/oder Empfangseinheit erneut aufgebaut werden. Dies kann zu Fehlfunktionen und/oder Signalverzögerungen führen, was bei der Erfindung in vorteilhafter Weise vermieden ist.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: ein mit einem Schließsystem ausgestattetes Kraftfahrzeug,
- Fig. 2: ein Schließsystem gemäß einer weiteren Ausführung in schematischer Art umfassend ein Smartphone, wobei das Smartphone im Außenbereich des Kraftfahrzeugs befindlich ist, und
- Fig. 3: das Schließsystem aus Fig. 2, wobei das Smartphone im Innenbereich des Kraftfahrzeugs befindlich ist.

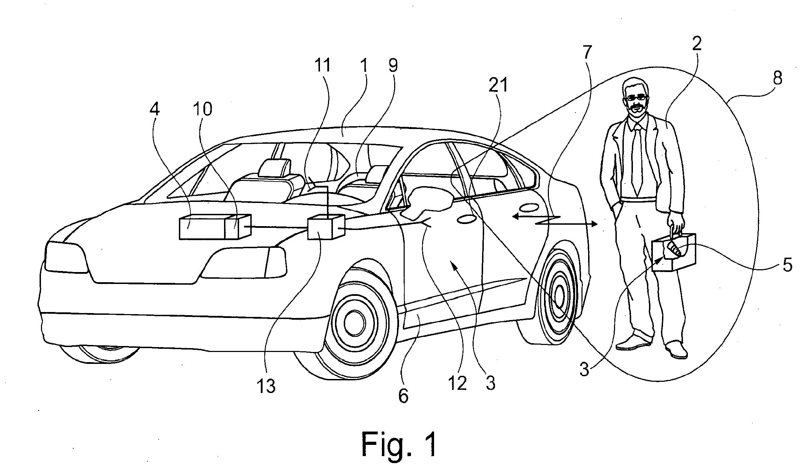

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfasst. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser im Außenbereich 8 des Kraftfahrzeugs 1, und zwar genauer innerhalb eines Wirkbereichs 8 Zugang zum Kraftfahrzeug 1 besitzt.

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 umfassen zu deren bestimmungsgemäßen Betrieb Sende- und/oder Empfangseinheiten mit einer Antenne für die Übertragung von elektromagnetischen Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal. Das codierte Betriebssignal dient zur Authentifikation der zweiten Einrichtung 5, womit bei berechtigter zweiter Einrichtung 5 nach positiver Auswertung des übertragenen Betriebssignals eine Änderung des Zustandes der ersten Einrichtung 4 bewirkbar ist. Die Übertragung des codierten Betriebssignals erfolgt dann, wenn der berechtigte Benutzer 2 den Türgriff 21 an der Autotüre 6 betätigt oder sich dem Türgriff 21 annähert. Dadurch wird die Entriegelung der Autotüren 6 entsprechend der KeylessEntry-Funktionalität ausgelöst. Ebensogut kann die Übertragung des codierten Betriebssignals auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses (elektronisches Zündschloss EZS) und/oder der Lenkradverriegelung (elektrische Lenkradverriegelung EL V). Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals zur Authentifikation der zweiten Einrichtung 5 erfolgt dann, wenn der berechtigte Benutzer 2 sich im Kraftfahrzeug 1, also in dessen Innenbereich 9, befindet und einen Start/Stopp-Schalter betätigt. Dadurch wird der Start-Vorgang o. dgl. des Kraftfahrzeugs 1 entsprechend der KeylessGo-Funktionalität ausgelöst. Zweckmäßigerweise ist der Start/Stopp-Schalter am Gangwahlhebel, am Zündschloss, im Armaturenbrett, in der Mittelkonsole o. dgl. im Kraftfahrzeug 1 angeordnet.

Für die erste Einrichtung 4 ist lediglich eine einzige Sende- und/oder Empfangseinheit 10 vorgesehen, wobei die Sende- und/oder Empfangseinheit 10 jedoch zwei Antennen 11, 12 umfasst. Die beiden Antennen 11, 12 sind räumlich getrennt angeordnet, und die eine Antenne 11 ist dem Innenbereich 9 als Innenantenne sowie die andere Antenne 12 dem Außenbereich 8 als Außenantenne zugeordnet. Die beiden Antennen 11, 12 dienen damit zur Signalabdeckung für den jeweiligen Bereich 8, 9 des Fahrzeugs 1. Für die beiden Antennen 11, 12 ist ein Signalverteiler 13 in der Art eines Power Splitters vorgesehen. Die Sende- und/oder Empfangseinheit 10 steht wiederum mittels des Signalverteilers 13 mit den beiden Antennen 11, 12 in Verbindung.

In bevorzugter Weise betreibt der Signalverteiler 13 die beiden Antennen 11, 12 mit unterschiedlichen Leistungen in der Art eines asymmetrischen Signalverteilers. Die Leistungsverteilung ist dabei derart gewählt, dass der jeweils zugeordnete Bereich 8, 9 abgedeckt ist. Zur Erreichung der Abdeckung hat es sich als zweckmäßig herausgestellt, dass der Signalverteiler 13 die Innenantenne 11 mit in etwa 10 % sowie die Außenantenne 12 mit in etwa 90 % der Gesamtleistung bzw. Sendeleistung der Sende- und/oder Empfangseinheit 10 betreibt. Dieser Aufteilung der Leistung liegt die aufgefundene Erkenntnis zugrunde, dass die Innenantenne 11 aufgrund des wesentlich kleineren abzudeckenden Bereichs 9 weniger Leistung als die Außenantenne 12 für den großen abzudeckenden Bereich 8 benötigt.

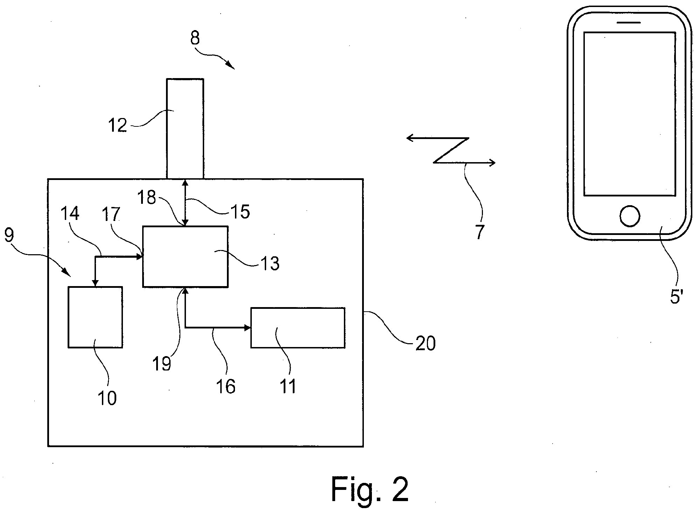

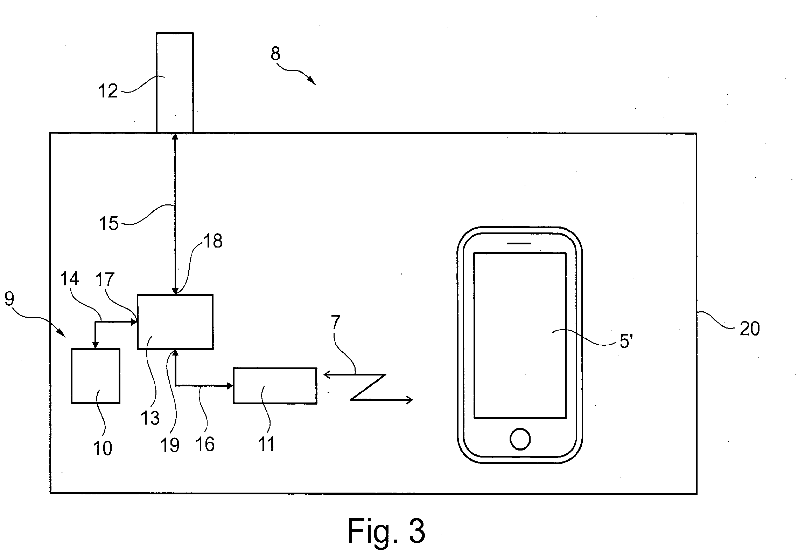

Anstelle eines elektronischen Schlüssels o. dgl. als zweite Einrichtung 5 kann auch ein Smartphone 5' als zweite Einrichtung Verwendung finden, wie in Fig. 2 und Fig. 3 näher gezeigt ist. Wie bereits erwähnt, erfolgt die Übertragung der Signale 7 mittels eines elektromagnetischen Trägers, und zwar in bevorzugter Weise im HF(Hochfrequenz)-Bereich. Weiterhin kann es sich bei dem HF-Bereich um eine standardisierte Bluetooth-Verbindung, insbesondere um Bluetooth Low Energy (BLE) mit einer Trägerfrequenz von in etwa 2,45 GHz, handeln. In der Regel besitzt ein Smartphone 5' eine BLE(Bluetooth Low Energy)-Schnittstelle, so dass es sich anbietet, diese für die Übertragung der Signale 7 zu verwenden.

In Fig. 2 ist das im Außenbereich 8 befindliche Smartphone 5' näher zu sehen. Zur Übertragung der Signale 7 dient eine Bluetooth Low Energy Verbindung zwischen dem Smartphone 5' und der als BLE-Antenne ausgebildeten, an der Fahrzeugkarosserie 20 des Kraftfahrzeugs 1 befindlichen Außenantenne 12. Die BLE-Sende- und/oder Empfangseinheit 10 der ersten Einrichtung 4 steht über eine BLE-Signalverbindung 14 mit dem Signalverteiler 13 in Verbindung. Hierfür besitzt der Signalverteiler 13 einen Eingang 17 für die Signalübertragung über die BLE-Signalverbindung 14. Des Weiteren weist der Signalverteiler 13 einen Ausgang 18 auf, so dass eine BLE-Signalverbindung 15 zur Außenantenne 12 hergestellt ist.

In Fig. 3 ist weiterhin das im Innenbereich 9 befindliche Smartphone 5' näher zu sehen. Zur Übertragung der Signale 7 dient wiederum die Bluetooth Low Energy Verbindung zwischen dem Smartphone 5' und der als BLE-Antenne ausgebildeten, innerhalb der Fahrzeugkarosserie 20 des Kraftfahrzeugs 1 befindlichen Innenantenne 11. Der Signalverteiler 13 weist weiterhin einen Ausgang 19 auf, so dass eine BLE-Signalverbindung 16 zur Innenantenne 11 hergestellt ist.

Wie anhand der Fig. 2 und Fig. 3 zu sehen ist, weist der Signalverteiler 13 einen Eingang 17 für die Signalübertragung 14 zwischen der Sende- und/oder Empfangseinheit 10 sowie dem Signalverteiler 13 und je einen Ausgang 18, 19 zwischen dem Signalverteiler 13 und der jeweiligen Antenne 12, 11 auf. Die Signalstärke für den Ausgang 18 zur Außenantenne 12 ist am Signalverteiler 13 nahezu verlustfrei, insbesondere ist die Auskopplung am Ausgang 18 zur Außenantenne 12 mit lediglich einem Verlust von in etwa 0,5 dB, eingestellt. Die Signalstärke für den Ausgang 19 zur Innenantenne 11 ist verlustbehaftet, insbesondere ist die Auskopplung am Ausgang 19 zur Innenantenne 11 mit einem Verlust von in etwa 10 dB, eingestellt. Des Weiteren kann die Signalstärke für die Außenantenne 12 mittels einer losen Kopplung zwischen dem Eingang 17 des asymmetrischen Signalverteilers 13 und dem Ausgang 19 des asymmetrischen Signalverteilers 13 zur Innenantenne 11 eingestellt sein.

Die Erfindung ist nicht auf die beschriebenen und dargestellten Ausführungsbeispiele beschränkt. Sie umfasst vielmehr auch alle fachmännischen Weiterbildungen im Rahmen der Patentansprüche. So kann ein derartiges Schließsystem 3 nicht nur im Kraftfahrzeug 1 eingesetzt werden sondern es sind auch Anwendungen, bei denen eine Signalabdeckung innerhalb eines Raums sowie im Außenbereich des Raums notwendig ist, möglich. Insbesondere ist auch eine Verwendung für ein Türschloss, das sich beispielsweise an einer Immobilie o. dgl. befindet, oder für sonstige Steuergeräte möglich.

### Bezugszeichen-Liste:

- 1:: Kraftfahrzeug / Fahrzeug
- 2:: (berechtigter) Benutzer
- 3:: Schließsystem
- 4:: erste Einrichtung
- 5:: zweite Einrichtung
- 5':: Smartphone
- 6:: Autotüre
- 7:: Signal
- 8:: Wirkbereich / (Außen-)Bereich
- 9:: (Innen-)Bereich
- 10:: (BLE-)Sende- und/oder Empfangseinheit (für erste Einrichtung)
- 11:: (Innen-)Antenne (für Innenbereich)
- 12:: (Außen-)Antenne (für Außenbereich)
- 13:: (asymmetrischer) Signalverteiler
- 14:: BLE-Signalverteilung / Signalübertragung (zwischen Sende- und/oder Empfangseinheit und Signalverteiler)
- 15:: BLE-Signalverteilung (zwischen Signalverteiler und Außenantenne)
- 16:: BLE-Signalverteilung (zwischen Signalverteiler und Innenantenne)
- 17:: Eingang (an Signalverteiler)
- 18:: Ausgang (an Signalverteiler zur Außenantenne)
- 19:: Ausgang (an Signalverteiler zur Innenantenne)
- 20:: Fahrzeugkarosserie
- 21:: Türgriff

## Patentansprüche

1. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses, der Lenkradverriegelung, zur Freigabe und/oder Sperrung der Wegfahrsperre oder des Motorsteuergeräts, und mit einer zugehörigen, in der Art eines elektronischen Schlüssels, eines ID-Gebers oder einer Chipkarte ausgebildeten zweiten Einrichtung (5), wobei die beiden Einrichtungen (4, 5) zu deren bestimmungsgemäßen Betrieb Sende- und/oder Empfangseinheiten für die Übertragung von insbesondere elektromagnetischen Signalen (7) umfassen, wobei es sich insbesondere bei wenigstens einem der zwischen der zweiten Einrichtung (5) und der ersten Einrichtung (4) übertragenen Signale (7) um ein codiertes Betriebssignal zur Authentifikation der zweiten Einrichtung (5) handelt, so dass nach positiver Auswertung des übertragenen Betriebssignals bei berechtigter zweiter Einrichtung (5) eine Änderung des Zustandes der ersten Einrichtung (4) bewirkbar ist, und wobei die Sende- und/oder Empfangseinheit eine Antenne zur Übertragung der Signale (7) aufweist, wobei die Sende- und/oder Empfangseinheit (10) für die erste Einrichtung (4) zwei Antennen (11, 12) umfasst, ein Signalverteiler (13) in der Art eines Power Splitters für die zwei Antennen (11, 12) vorgesehen ist, und wobei die Sende- und/oder Empfangseinheit (10) mittels des Signalverteilers (13) mit den zwei Antennen (11, 12) in Verbindung steht,
**dadurch gekennzeichnet, dass** die zwei Antennen (11, 12) räumlich getrennt angeordnet sind, und dass eine erste Antenne (11) der zwei Antennen (11, 12) dem Innenbereich (9) als Innenantenne (11) und eine zweite Antenne (12) der zwei Antennen (11, 12) dem Außenbereich (8) als Außenantenne (12) zugeordnet ist.

2. Schließsystem nach Anspruch 1, **dadurch gekennzeichnet, dass** der Signalverteiler (13) die zwei Antennen (11, 12) mit unterschiedlichen Leistungen in der Art eines asymmetrischen Signalverteilers betreibt, insbesondere dass der Signalverteiler (13) die Innenantenne (11) mit in etwa 10 % sowie die Außenantenne (12) mit in etwa 90 % der Gesamtleistung betreibt.

3. Schließsystem nach Anspruch 1 oder 2, **dadurch gekennzeichnet, dass** der Signalverteiler (13) einen Eingang (17) für die Signalübertragung (14) zwischen der Sende- und/oder Empfangseinheit (10) sowie dem Signalverteiler (13) und je einen Ausgang (18, 19) zwischen dem Signalverteiler (13) und der jeweiligen Antenne (12, 11) aufweist, und dass vorzugsweise die Signalstärke für den Ausgang (18) zur Außenantenne (12) nahezu verlustfrei, insbesondere dass die Auskopplung am Ausgang (18) zur Außenantenne (12) mit einem Verlust von in etwa 0,5 dB, eingestellt ist, und dass weiter vorzugsweise die Signalstärke für den Ausgang (19) zur Innenantenne (11) verlustbehaftet, insbesondere dass die Auskopplung am Ausgang (19) zur Innenantenne (11) mit einem Verlust von in etwa 10 dB, eingestellt ist.

4. Schließsystem nach einem der Ansprüche 1 bis 3, **dadurch gekennzeichnet, dass** die Signalstärke für die Außenantenne (12) mittels einer losen Kopplung zwischen dem Eingang (17) des asymmetrischen Signalverteilers (13) und dem Ausgang (19) des asymmetrischen Signalverteilers (13) zur Innenantenne (11) eingestellt ist.

5. Schließsystem nach einem der Ansprüche 1 bis 4, **dadurch gekennzeichnet, dass** die Übertragung der Signale (7) mittels eines Trägers im HF(Hochfrequenz)-Bereich erfolgt, und dass es sich vorzugsweise bei dem HF-Bereich um Bluetooth, insbesondere um Bluetooth Low Energy (BLE) mit einer Frequenz von in etwa 2,45 GHz, handelt.

6. Schließsystem nach einem der Ansprüche 1 bis 5, **dadurch gekennzeichnet, dass** es sich bei der zweiten Einrichtung um ein Smartphone (5'), insbesondere mit einer BLE(Bluetooth Low Energy)-Schnittstelle, handelt.

## Claims

1. A locking system, in particular for access and/or driving authorization for a motor vehicle (1) in the form of a keyless entry/go functionality, with a first device (4) which is embodied as a control device having at least two states, such as a control device for unlocking and/or locking the car doors (6), the ignition lock, the steering wheel lock, for releasing and/or locking the immobilizer or the engine control unit, and with an associated second device (5) which is embodied in the form of an electronic key, an ID transmitter, or a chip card, wherein the two devices (4, 5) comprise transmitting and/or receiving units for the transmission of in particular electromagnetic signals (7) for their intended operation, at least one of the signals (7) transmitted between the second device (5) and the first device (4) being in particular a coded operating signal for authenticating the second device (5), so that, after positive evaluation of the transmitted operating signal, a change can be effected in the state of the first device (4) if the second device (5) is authorized, and wherein the transmitting and/or receiving unit has an antenna for transmitting the signals (7), the transmitting and/or receiving unit (10) for the first device (4) comprising two antennas (11, 12), a signal distributor (13) in the manner of a power splitter is provided for the two antennas (11, 12), and wherein the transmitting and/or receaiving unit (10) is connected to the two antennas (11, 12) by means of the signal distributor (13),
**characterized in that** the two antennas (11, 12) are arranged so as to be spatially separated, and that a first antenna (11) of the two antennas (11, 12) is associated with the inner region (9) as an inner antenna (11) and a second antenna (12) of the two antennas (11, 12) is associated with the outer region (8) as an outer antenna (12).

2. The locking system according to claim 1, **characterized in that** the signal distributor (13) operates the two antennas (11, 12) with different power outputs in the manner of an asymmetrical signal distributor, in particular that the signal distributor (13) operates the internal antenna (11) with approximately 10% and the external antenna (12) with approximately 90% of the total power.

3. The locking system according to claim 1 or 2, **characterized in that** the signal distributor (13) has an input (17) for the signal transmission (14) between the transmitting and/or receiving unit (10) as well as the signal distributor (13) and one output (18, 19) each between the signal distributor (13) and the respective antenna (12, 11), and that, preferably, the signal strength for the output (18) to the external antenna (12) is almost loss-free, in particular that the output-coupling at the output (18) to the external antenna (12) is set with a loss of approximately 0.5 dB, and that, more preferably, the signal strength for the output (19) to the internal antenna (11) is lossy, in particular that the output-coupling at the output (19) to the internal antenna (11) is set with a loss of approximately 10 dB.

4. The locking system according to any one of claims 1 to 3, **characterized in that** the signal strength for the external antenna (12) is set by means of a loose coupling between the input (17) of the asymmetrical signal distributor (13) and the output (19) of the asymmetrical signal distributor (13) to the internal antenna (11).

5. The locking system according to any one of claims 1 to 4, **characterized in that** the transmission of the signals (7) takes place by means of a carrier in the HF (highfrequency) range, and that the HF range is preferably Bluetooth, in particular Bluetooth Low Energy (BLE) with a frequency of approximately 2.45 GHz.

6. The locking system according to any one of claims 1 to 5, **characterized in that** the second device is a smartphone (5'), in particular with a BLE (Bluetooth Low Energy) interface.

## Revendications

1. Système de fermeture, en particulier pour l'autorisation d'accès et/ou de conduite concernant un véhicule automobile (1) à la manière d'une fonctionnalité d'entrée/démarrage sans clé, comprenant un premier dispositif (4) présentant au moins deux états et réalisé sous forme de dispositif de commande, comme un dispositif de commande pour le verrouillage et/ou déverrouillage des portières (6), de la serrure de contact, du verrouillage de volant, pour le déblocage et/ou blocage du dispositif antidémarrage ou de l'appareil de commande de moteur, et comprenant un deuxième dispositif (5) associé, réalisé à la manière d'une clé électronique, d'un codeur d'ID ou d'une carte à puce, dans lequel les deux dispositifs (4, 5) comprennent pour leur utilisation correcte des unités d'émission et/ou de réception pour la transmission de signaux (7) en particulier électromagnétiques, dans lequel, en particulier dans le cas d'au moins l'un des signaux (7) transmis entre le deuxième dispositif (5) et le premier dispositif (4), il s'agit d'un signal de fonctionnement codé pour l'authentification du deuxième dispositif (5) de sorte qu'après une évaluation positive du signal de fonctionnement transmis, si le deuxième dispositif (5) est autorisé, une modification de l'état du premier dispositif (4) peut être provoquée, et dans lequel l'unité d'émission et/ou de réception présente une antenne pour transmettre les signaux (7), dans lequel l'unité d'émission et/ou de réception (10) comprend deux antennes (11, 12) pour le premier dispositif (4), un distributeur de signaux (13) à la manière d'un diviseur de puissance est prévu pour les deux antennes (11, 12), et dans lequel l'unité d'émission et/ou de réception (10) est en communication avec les deux antennes (11, 12) au moyen du distributeur de signaux (13),
**caractérisé en ce que** les deux antennes (11, 12) sont disposées de manière spatialement séparée, et **en ce qu'**une première antenne (11) des deux antennes (11, 12) est attribuée à la zone intérieure (9) en tant qu'antenne intérieure (11) et une deuxième antenne (12) des deux antennes (11, 12) est attribuée à la zone extérieure (8) en tant qu'antenne extérieure (12).

2. Système de fermeture selon la revendication 1, **caractérisé en ce que** le distributeur de signaux (13) fait fonctionner les deux antennes (11, 12) avec différentes puissances à la manière d'un distributeur de signaux asymétrique, en particulier **en ce que** le distributeur de signaux (13) fait fonctionner l'antenne intérieure (11) avec environ 10 % et l'antenne extérieure (12) avec environ 90 % de la puissance totale.

3. Système de fermeture selon la revendication 1 ou 2, **caractérisé en ce que** le distributeur de signaux (13) présente une entrée (17) pour la transmission de signaux (14) entre l'unité d'émission et/ou de réception (10) ainsi que le distributeur de signaux (13) et respectivement une sortie (18, 19) entre le distributeur de signaux (13) et l'antenne respective (12, 11), et **en ce que** de préférence l'intensité de signal pour la sortie (18) vers l'antenne extérieure (12) est réglée presque sans perte, en particulier **en ce que** le découplage à la sortie (18) vers l'antenne extérieure (12) est réglé avec une perte d'environ 0,5 dB, **en ce que** de plus grande préférence l'intensité de signal pour la sortie (19) vers l'antenne intérieure (11) est réglée avec perte, en particulier **en ce que** le découplage à la sortie (19) vers l'antenne intérieure (11) est réglé avec une perte d'environ 10 dB.

4. Système de fermeture selon l'une quelconque des revendications 1 à 3, **caractérisé en ce que** l'intensité de signal pour l'antenne extérieure (12) est réglée au moyen d'un couplage lâche entre l'entrée (17) du distributeur de signaux asymétrique (13) et la sortie (19) du distributeur de signaux asymétrique (13) vers l'antenne intérieure (11).

5. Système de fermeture selon l'une quelconque des revendications 1 à 4, **caractérisé en ce que** la transmission des signaux (7) est effectuée au moyen d'un support dans la plage HF (haute fréquence), et **en ce que** la plage HF est de préférence Bluetooth, en particulier Bluetooth Low Energy (BLE) avec une fréquence d'environ 2,45 GHz.

6. Système de fermeture selon l'une quelconque des revendications 1 à 5, **caractérisé en ce que** le deuxième dispositif est un smartphone (5'), de préférence muni d'une interface BLE (Bluetooth Low Energy).
